(19)

Europäisches
Patentamt
European
Patent Office
Office européen
des brevets

(11) **EP 1 859 860 A1**

(12) **EUROPEAN PATENT APPLICATION**
published in accordance with Art. 158(3) EPC

(43) Date of publication:
**28.11.2007 Bulletin 2007/48**

(21) Application number: **06733228.8**

(22) Date of filing: **02.03.2006**

(51) Int Cl.:
**B01J 21/04** (2006.01)     **B01J 23/75** (2006.01)
**B01J 37/02** (2006.01)     **C07C 1/04** (2006.01)

(86) International application number:
**PCT/RU2006/000095**

(87) International publication number:
**WO 2006/093435 (08.09.2006 Gazette 2006/36)**

(84) Designated Contracting States:
**DE ES FR GB IT PT**

(30) Priority: **04.03.2005 RU 2005105984**

(71) Applicant: **Limited Liability Company
"United Research and Development
Centre"
Moscow 119333 (RU)**

(72) Inventors:
• **KRYLOVA, Alla Yurevna
Moscow, 109518 (RU)**

• **MIKHAILOVA, Yanina Vladislavovna
Moskovskaya obl., 140410 (RU)**
• **SVIDERSKY, Sergey Alexandrovich
Moscow, 119571 (RU)**

(74) Representative: **Andrae, Steffen et al
Andrae Flach Haug
Balanstrasse 55
81541 München (DE)**

(54) **SYNTHESIS CATALYST FOR C5-C100 HYDROCARBONS AND A METHOD FOR PRODUCING SAID CATALYST**

(57)     The invention relates to petroleum, gas and coal chemistry, and concerns a catalyst for $C_5$-$C_{100}$ hydrocarbons synthesis in particular from CO and $H_2$ and method for producing the said catalyst.

The proposed catalyst for synthesizing $C_5$-$C_{100}$ hydrocarbons comprises an aluminum oxide-based support which is obtainable from a gibbsite structure aluminum hydroxide and cobalt which content ranges from 15 to 50 mass %. Method of the catalyst making consists in preparing the support by mixing cobalt composition with aluminum hydroxide and in annealing said mixture, impregnating in two or more steps the aluminum oxide-based support with a cobalt salt aqueous solution and in thermally treating it, wherein the gibbsite structure aluminum hydroxide is used, the cobalt compositions and the hydroxide are mixed in a dry forms thereof and the molar cobalt-aluminum ratio ranges from 1:1 to 1:30.

**EP 1 859 860 A1**

## Description

### Field of invention

Invention relates to petrochemistry, gas chemistry, coal chemistry and concerns a catalyst for synthesis of hydrocarbons $C_5$-$C_{100}$ from CO and $H_2$, method of preparing the said catalyst and method of producing aliphatic hydrocarbons $C_5$-$C_{100}$ with the said catalyst.

### Prior knowledge

Natural gas finds wide application as carrier of energy. Today the main areas of natural gas use are power industry (20-25%), industry (35-40%), as well as domestic sector (~40%). In future importance of natural gas will steadily grow. Processes of chemical processing of natural and associated petroleum gases into liquid hydrocarbons arouse great interest as an alternative method for producing motor fuels (gasoline, diesel, jet). This interest increases many times in the period of oil crises caused by political instability in oil-producing regions of the world (Middle East and Latin America first of all) and resulting in sharp increase of oil and oil products prices.

Development of natural gas processes in the world directly depends on the distance between gas field and a consumer that is on transportation cost. Gas is transported in compressed form with pipelines or in liquefied form in special tankers. One of the possible methods of natural gas transportation is its chemical conversion at production site into liquid hydrocarbons and transportation of these oil products with traditional methods by rail ways or by sea. In some cases the latter method turns out to be more economic method for natural gas transportation.

Special interest to the issues of carbon-bearing gases is also related to ecological problems. To create ecologically safe and wasteless technologies of oil production, development of advanced methods for utilization of associated petroleum gases is the most acute. One of the methods for this problem resolution is synthetic oil production with GTL method and this oil further transportation and refining together with crude oil.

Currently the main method of synthetic motor fuel production is technology "Gas-to-liquid" ("GTL"). Modem GTL process in its hydrocarbon version is a tree stage technology with catalytic reactions. First low-activity paraffins making the major part of natural and associated gas are converted into more reactive mixture of carbon oxide and hydrogen ("syngas"). For this purpose steam or autothermal reforming is mainly used, rarely - partial oxidation. Second stage is synthetic of hydrocarbons from CO and $H_2$ ("Fischer-Tropsch synthesis"). At the third stage hydrocarbon products are brought up to marketable quality using hydrocracking or hydro-isomerization. "Ideological" stage of GTL process is Fischer-Tropsch synthesis, as this reaction defines amount and composition of the hydrocarbons obtained, as well as the necessity and type of further refining of the products. Interest to this reaction becomes even greater as it allows conversion into liquid hydrocarbon mixtures of syngas produced not only from natural or associated gas but from any carbon source (coal, peat, biomass, etc.).

Synthesis of hydrocarbons from CO and $H_2$ is mainly carried out with application of iron or cobalt catalysts; however the latter are given definite preference, as they are selective to leaner paraffins. In their presence only insignificant amount of olefins and oxygen-containing compounds are formed.

In many aspects efficiency of this stage depends on the ability of the catalyst applied to implement the reaction with the minimum formation of gaseous hydrocarbons - main byproducts- and especially methane as it is a feedstock of GTL process. Today researchers are focused on development of catalysts with high ability of polymerization and lowered selectivity to methane formation.

Ability of polymerization is assessed by alpha-value in Schultz-Flory equation describing molecular-mass distribution of the hydrocarbons formed:

$$W_n = (1 - \alpha)^2 \cdot n \cdot \alpha^{n-1},$$

where $W_n$ - mass fraction of n-paraffin with carbon number n, n - number of carbon atoms, $\alpha$ - constant characterizing probability of hydrocarbon chain growth. The higher $\alpha$, the more selective the catalyst is to formation of heavy products. For synthesis of high-molecular hydrocarbons from CO and $H_2$, for example, catalysts are used allowing making hydrocarbon mixtures with $\alpha$=0.9, with a share of paraffin wax ($C_{19+}$) of 40%. Theoretically selectivity to methane in this case is near 1%. However, due to side reaction of direct hydrogenation of CO (CO + $H_2$ = $CH_4$ + $H_2$) under real conditions of Fischer-Tropsch synthesis this index significantly exceeds the said theoretic value.

For synthesis of high-molecular hydrocarbons from CO and $H_2$ cobalt catalysts are mainly used containing alumina as support (USA Patents Nos. 4801573; 5028634; 6271432, European application EP 0313375). In the most cases feedstock for $Al_2O_3$ is boehmite AlO(OH). Boehmite is produced with dehydration of $Al(OH)_3$ possessing crystal-

lographic structure of gibbsite or bayerite.

In catalysis and, in particular in Fischer-Tropsch synthesis, γ-alumina finds the widest application being most frequently produced from boehmite AlO(OH), which in its turn, is mainly produced with hydration of $Al(OH)_3$, possessing crystallographic structure of bayerite. Over $\gamma\text{-}Al_2O_3$ produced in this way metals (in particular, cobalt) are applied in several stages from solutions of salts with further calcination at each stage to fix salt component on the support. However experience shows that catalysts $Co/\gamma\text{-}Al_2O_3$, used for Fischer-Tropsch synthesis, due to specific features of the support structure are very sensible to temperature.

$\gamma\text{-}Al_2O_3$ is known to have a spinel structure, in which atoms of aluminum locate partially in tetrahedrons and partially in octahedrons. When cobalt reacts with alumina atoms of cobalt are capable of replacing atoms of aluminum in both positions (Journal of Catalysis, 1985, v.93, p.38). Thermal treatment of such a catalyst (calcination, reduction, hydro-thermal treatment) results in enhanced reaction of cobalt with alumina with dominating formation of hard-to-reduce spinel $CoAl_2O_4$. Catalysts containing spinel are described, for instance, in patent EP 1239019 and application US 2004/0204506. Normally they are characterized by insufficient activity as formation of spinels and spinel-like structures results in lower extent of cobalt reduction and, as a consequence, to decrease of the catalyst active surface. To eliminate these disadvantages a noble metal (most frequently Pt or Ru) is added to cobalt-alumina catalyst favouring more complete reduction of cobalt from cobalt-alumina compounds.

The closest equivalent to the catalyst proposed in this invention is the catalyst for synthesis of hydrocarbons $C_5\text{-}C_{100}$ from CO and $H_2$ based on cobalt and developed by ConocoPhillips company (US2004/0132833A1); this catalyst containing γ-alumina stable in hydro-thermal conditions as the support. Method for this catalyst preparing includes thermal treatment of Boehmite with obtaining γ-alumina on which cobalt nitrate is applied by impregnation in several stages. In addition to cobalt and $\gamma\text{-}Al_2O_3$ the said catalyst contains a noble metal of group VIII (Pt or Ru) favouring reduction of cobalt from mixed oxides of cobalt and aluminum and/or some other promotes which are also added to the catalyst with impregnation. The catalyst developed allow synthesis of hydrocarbons from CO and $H_2$ in a fixed bed of the catalyst at the temperature of 200-230°C and pressure ~25 bar with productivity in terms of hydrocarbons $C_{5+}$ 500-800 g/h/kg of catalyst and selectivity to methane of 8-10%.

However the said catalytic system is characterize by insufficiently low selectivity to methane formation which is 8-10%, and in some cases reaches 15-20%.

## Disclosure of invention

This invention is based on the task of creating a catalyst for synthesis of hydrocarbons $C_5\text{-}C_{100}$, possessing higher activity and selectivity to hydrocarbon products with high molecular weight, improved stability to changes in temperature mode and lowered selectivity to formation of methane - by-product of reaction, as well as creating a method for such catalyst preparing.

The task is resolved by making a catalyst for synthesis of hydrocarbons $C_5\text{-}C_{100}$ containing a support based on alumina produced from aluminum hydroxide in accordance with the invention, with the structure of gibbsite and cobalt content of 15-50 wt.%.

Application of aluminum hydroxide with gibbsite structure allows formation of a layer preventing formation of hard-to-reduce spinel $CoAl_2O_4$, which ensures maintaining cobalt ability to reduce and hence higher catalyst activity and selectivity to formation of hydrocarbon products with high molecular weight.

It was found that application of the said catalyst in synthesis of hydrocarbons from CO and $H_2$ results in high selectivity to hydrocarbons $C_{5+}$ (about 90%) and low selectivity to methane (less than 5 wt.%). It should be noted that the catalysate mainly contains normal paraffins (about 80%). The said catalyst is characterized by polymerizing ability: α value is equal to 0.9-0.97 and share of hydrocarbons $C_{11+}$ in products is 80-85%.

In the particular case of this invention implementation the said catalyst additionally contains metals of groups VII-VIII of Mendeleev's Periodic Table, which also favours cobalt reduction.

The task is also resolved by the fact that method for preparing a catalyst for synthesis of hydrocarbons $C_5\text{-}C_{100}$, including support preparing by mixing cobalt compounds with aluminum hydroxide and calcination, impregnation of alumina based support in two or more stages with water solution of cobalt salt and thermal treatment in compliance with this invention, includes application of aluminum hydroxide with the structure of gibbsite and mixing of cobalt compound and aluminum hydroxide in dry form with mole ratio of cobalt and aluminum equal from 1:1 to 1:30.

Increase of selectivity to high-molecular hydrocarbons and stability is achieved thanks to the proposed method of preparing cobalt-aluminum catalyst characterized by lowered interaction of cobalt with the support.

Initial materials used for preparing $\gamma\text{-}Al_2O_3$ - gibbsite and boehmite - are known to differ substantially from each other from the point of view of crystallographic structure. Four-coordinated atoms of aluminum as part of bayerite (and Boehmite) structure form together with oxygen and water solid strips and two-dimensional layers linked to each other with hydrogen bonds (see figure on the right). We have established that ions of cobalt actively react with bayerite and especially with boehmite replacing aluminum in tetrahedral positions even in mechanical mixing without thermal treatment which favours formation at further calcination of cobalt-aluminum spinel reduced by hydrogen at temperature higher than 900°C.

Structure of gibbsite is more volumetric, atoms of aluminum in this structure are six-coordinated. Together with oxygen and water they are linked into six-member rings, bonded with hydrogen bonds (see figure on the left). Substitution of aluminum located in octahedral position with ions of cobalt results during further calcination in formation of mixed oxides of cobalt and aluminum capable of reducing at temperatures below 500°C. Oxide layer is thus formed on the surface of alumina preventing reaction of the residual cobalt with the support in the process of impregnation with water solution of cobalt salt and further calcination.

Thermal treatment can be done by drying and/or calcination.

In the particular case of this invention implementation promoters are additionally added by support impregnation with solutions of promoters salts. Metals of groups VII-VIII of Mendeleev's Periodic Table are used as the promoters.

**Brief description of the drawings**

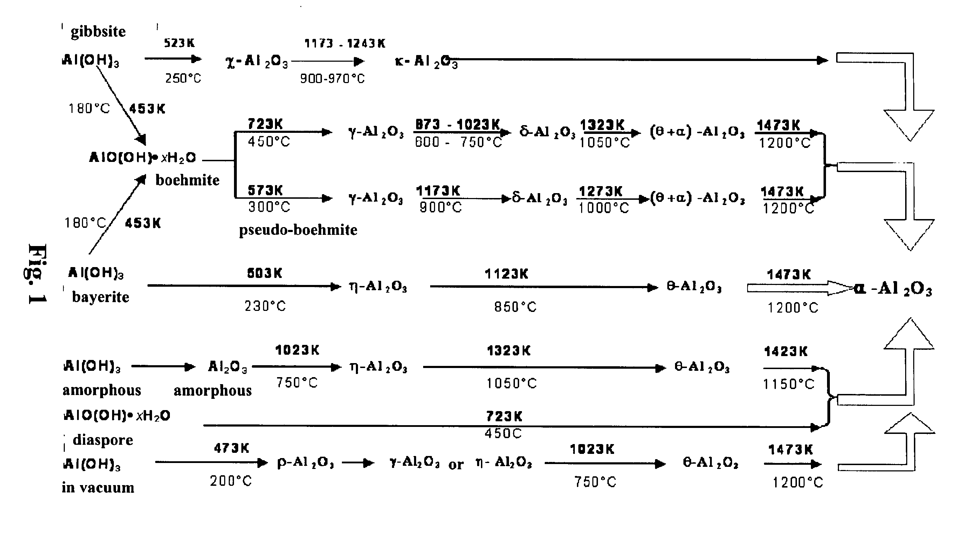

Fig. 1 shows diagram of aluminum hydroxides of various structure conversion into alumina $Al_2O_3$

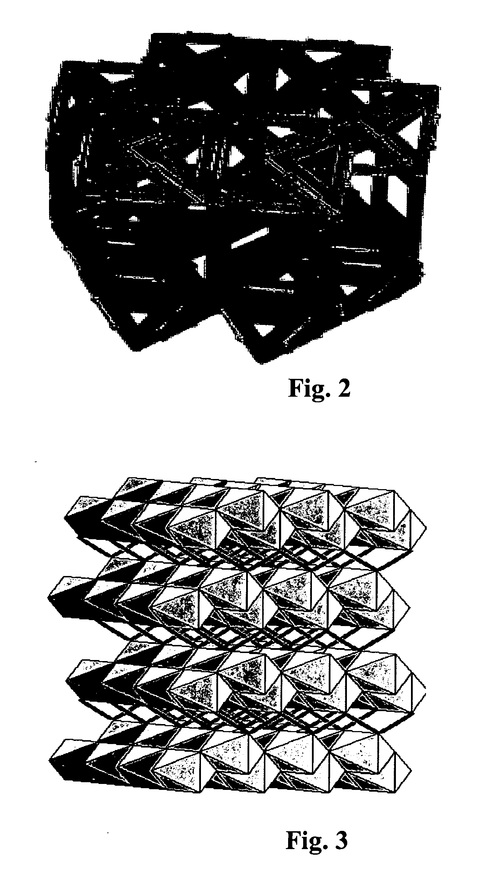

Fig. 2 shows structure of gibbsite.
Fig. 3 shows structure of boehmite.

**Best mode of the invention implementation**

Method of preparing cobalt-aluminum catalyst proposed in this invention comprises mechanical mixing of part of cobalt in the form of cobalt salt and aluminum hydroxide with the structure of gibbsite with further calcination to make a layer preventing formation of hard-to-reduce spinel $CoAl_2O_4$, after which consecutive (second, third, etc.) stages of impregnation with cobalt salt solution are carried out to add the rest cobalt up to the content of 15-50 wt.%, preferably 20-40 wt.%, with intermediate stages of drying and calcination.

It was established that application of the catalyst corresponding to this invention in the synthesis of hydrocarbons from CO and $H_2$ results in high selectivity to hydrocarbons $C_{5+}$ (about 90%) and low selectivity to methane (less than 5%). It should be noted that catalysate mainly contains normal paraffins (about 80%). The catalyst is characterized by high polymerizing power: value $\alpha$ calculated by Shultz-Flory equation is equal to 0.9-0.97 and share of hydrocarbons $C_{11+}$ in the products of synthesis is 80-85%.

At the first stage of the catalyst preparation oxide, nitrate, formiate, carbonate, basic carbonate, acetate, acetylacetonate, etc. are used as cobalt compounds. Cobalt compound containing 5-20 wt.% of the metal (preferably 10-15 wt.%) is mechanically (manually or with mechanical sieve) mixed with aluminum hydroxide and calcined during 1-24 hours (preferably 5-15 hours) at the temperature of 350-1000°C (preferably 500-1000°C). The rest part of the active component (cobalt) is applied with several stage of impregnation with cobalt salts (nitrate, acetate, formiate, acetylacetonate, etc.). At each stage the sample is dried at water base and the catalyst precursor obtained is dried and/or calcined in the flow of air at the temperature 100 to 1000°C (preferably 300-500°C) during 0.5-10 hours (preferably 1-5 hours).

Before synthesis the catalyst sample is activated by reduction in the stream of hydrogen at the temperature of 300-600°C (preferably 350-500°C) during 0.5-5 hours (preferably 0.5-2.5 hours).

Synthesis of hydrocarbons from CO:$H_2$ is carried out in a tubular reactor with a fixed bed of catalyst under pressure of 1-50 bar (preferably 10-30 bar) and temperature 150-300°C (preferably 180-230°C). Mole ratio of CO:$H_2$ in syngas is 1:1÷3 (preferably 1:2).

The following specific examples of the invention implementation are provided for better explanation of the invention.

**Example 1.**

Catalyst sample with the composition as 32% Co/$Al_2O_3$ is prepared as follows in three stages.

Stage 1. Cobalt carbonate is mechanically mixed with aluminum hydroxide of gibbsite structure at Al/Co = 6 (mol.). The mixture is then calcined in muffle at T= 600°C during 10 hours. At this stage formation of spinel $CoAl_2O_4$ was not identified with X-ray phase analysis.

Stage 2. 18.5 g of cobalt nitrate is dissolved in distilled water and added to 30 g of material obtained at Stage 1. The mixture is placed into porcelain cup and dried at water base for 30-60 minutes after which it is calcined at the temperature of 400°C during 1 hour.

Stage 3. 18.5 g of cobalt nitrate is dissolved in distilled water and added to 30 g of material obtained at Stage 2. The mixture is placed into porcelain cup and dried at water base for 30-60 minutes.

Before synthesis the catalyst sample is activated in the stream of hydrogen at the temperature of 350-600°C (preferably 400-450°C) during 1 hour. Synthesis of hydrocarbons is carried out in a tubular reactor with a fixed bed of catalyst under atmospheric pressure and in the temperature range of 150-220°C using syngas with $CO/H_2 = 1/2$(mol.).

**Examples 2, 3 and 4.**

Catalyst is prepared similar to Example 1 except for adding cobalt at the first stage in the ratio of Al/Co equal to 12, 9 and 3 (mol.), respectively. In such a case total content of cobalt in the catalyst makes 27, 29 and 38 %, respectively.

**Example 5.**

Catalyst is prepared similar to Example 1 except for using dehydrated aluminum hydroxide of Boehmite structure for the support preparation. X-ray phase analysis at Stage 1 of the catalyst preparation identified formation of spinel-like structures.

**Example 6.**

Catalyst is prepared similar to Example 1 except for using cobalt nitrate at the first stage of the catalyst preparation similar to Stage 2.

**Example 7.**

Catalyst sample with the composition as 32%Co-0,5%Re/$Al_2O_3$ is prepared as follows in four stages.
Stage 1. Cobalt carbonate is mechanically mixed with aluminum hydroxide of gibbsite structure at Al/Co /Co = 6 (mol.). The mixture is then calcined in muffle at T= 600°C during 10 hours. At this stage formation of spinel $CoAl_2O_4$ was not identified with X-ray phase analysis.
Stage 2. 18.5 g of cobalt nitrate is dissolved in distilled water and added to 30 g of material obtained at Stage 1. The mixture is placed into porcelain cup and dried at water base for 30-60 minutes after which it is calcined at the temperature of 400°C during 1 hour.
Stage 3. 0.21 g of ammonium perrhenate is dissolved in distilled water and added to the material obtained at Stage 2. The mixture is placed into porcelain cup and dried at water base for 30-60 minutes after which it is calcined at the temperature of 450°C during 1 hour.
Stage 4. 18.5 g of cobalt nitrate is dissolved in distilled water and added to the material obtained at Stage 3. The mixture is placed into porcelain cup and dried at water base for 30-60 minutes.
Before synthesis the catalyst sample is activated in the stream of hydrogen at the temperature of 450°C during 1 hour. Reduction and testing of the catalyst sample is carried out as described in Example 1.

**Example 8.**

The catalyst prepared and activated as described in Example 6 is used.
Synthesis of hydrocarbons is carried out in a tubular reactor with a fixed bed of catalyst under the pressure of 20 bar and in the temperature range of 150-250°C using syngas with $CO/H_2 = 1/2$(mol.).

**Example 9.**

Composition and method of the catalyst preparation are similar to the described in Example 7 except for applying Pd instead of Re. Activation and conditions of synthesis correspond to the described in Example 1.

**Example 10.**

Composition and method of the catalyst preparation are similar to the described in Example 7 except for applying Ru instead of Re. Activation and conditions of synthesis correspond to the described in Example 1.
Results of testing samples of the catalysts prepared and tested in compliance with Examples 1-10 are shown in the Table below.

## Table

Indices of hydrocarbons synthesis from CO and $H_2$ carried out with samples of the catalysts corresponding to the invention

| Example | Conversion of CO, % | Selectivity to $CH_4$, % | Selectivity to $C_{5+}$, % | $[C_{11+}]$, wt.% | $\alpha$ |
|---|---|---|---|---|---|
| 1 | 58 | 3 | 93 | 86 | 0.92 |
| 2 | 66 | 4 | 89 | 81 | 0.91 |
| 3 | 58 | 4 | 92 | 83 | 0.91 |
| 4 | 67 | 6 | 87 | 84 | 0.91 |
| 5 | 36 | 29 | 40 | 84 | 0.93 |
| 6 | 64 | 5 | 84 | 84 | 0.94 |
| 7 | 90 | 4 | 88 | 76 | 0.88 |
| 8 | 66 | 4 | 93 | 83 | 0.91 |
| 9 | 60 | 7 | 81 | 71 | 0.87 |
| 10 | 81 | 8 | 79 | 61 | 0.83 |

Results in the above table indicate that the proposed method of cobalt catalyst preparation results in catalytic systems characterized by high selectivity to the target product (about 90%) and allowing production of hydrocarbons with high molecular weight ($\alpha > 0.9$) with low selectivity to byproduct - methane - formation (mainly less than 5%).

**Industrial application**

This invention is intended for using in petrochemistry, gas chemistry, and coal chemistry, for synthesis of aliphatic hydrocarbons $C_5$-$C_{100}$, in particular, in the synthesis of hydrocarbons $C_5$-$C_{100}$ from carbon monoxide and hydrogen.

**Claims**

1. A catalyst for hydrocarbons $C_5$-$C_{100}$ synthesis, containing alumina-based support produced from aluminum hydroxide of gibbsite structure, and cobalt in the amount of 15-50 wt.%.

2. The catalyst as claimed in Claim 1, *which* additionally contains metals of groups VII-VIII of Mendeleev's Periodic Table.

3. Method of preparing a catalyst for hydrocarbons $C_5$-$C_{100}$ synthesis, including preparation of support by mixing cobalt compounds with aluminum hydroxide and calcination, support impregnation with water solution of cobalt salt and thermal treatment, *wherein* aluminum hydroxide of gibbsite structure is used and cobalt compounds and aluminum hydroxide are mixed in dry forms, with mole ration of cobalt and aluminum is 1:1 to 1: 30.

4. The method as claimed in Claim 3, *wherein* thermal treatment is done by drying and /or calcination.

5. The method as claimed in Claim 3, *wherein* promoters are additionally introduced through support impregnation with salts solution thereof.

6. The method as claimed in Claim 5, *wherein* metals of groups VII-VIII of Mendeleev's Periodic Table are used as promoters.

EP 1 859 860 A1

**Fig. 1**

gibbsite

$Al(OH)_3$ →(523K / 250°C)→ $\chi$-$Al_2O_3$ →(1173 - 1243K / 900-970°C)→ $\kappa$-$Al_2O_3$

180°C \ 453K

$AlO(OH)\cdot xH_2O$ boehmite

723K / 450°C → $\gamma$-$Al_2O_3$ →(873 - 1023K / 600 - 750°C)→ $\delta$-$Al_2O_3$ →(1323K / 1050°C)→ $(\theta+\alpha)$-$Al_2O_3$ →(1473K / 1200°C)→

573K / 300°C → $\gamma$-$Al_2O_3$ →(1173K / 900°C)→ $\delta$-$Al_2O_3$ →(1273K / 1000°C)→ $(\theta+\alpha)$-$Al_2O_3$ →(1473K / 1200°C)→

pseudo-boehmite

180°C / 453K

$Al(OH)_3$ bayerite →(503K / 230°C)→ $\eta$-$Al_2O_3$ →(1123K / 850°C)→ $\theta$-$Al_2O_3$ →(1473K / 1200°C)→ $\alpha$-$Al_2O_3$

$Al(OH)_3$ amorphous → $Al_2O_3$ amorphous →(1023K / 750°C)→ $\eta$-$Al_2O_3$ →(1323K / 1050°C)→ $\theta$-$Al_2O_3$ →(1423K / 1150°C)→

$AlO(OH)\cdot xH_2O$ diaspore →(723K / 450C)→

$Al(OH)_3$ in vacuum →(473K / 200°C)→ $\rho$-$Al_2O_3$ → $\gamma$-$Al_2O_3$ or $\eta$-$Al_2O_3$ →(1023K / 750°C)→ $\theta$-$Al_2O_3$ →(1473K / 1200°C)→

7

**Fig. 2**

**Fig. 3**

## INTERNATIONAL SEARCH REPORT

| | International application No. |
|---|---|
| | PCTRU2006/000095 |

**A. CLASSIFICATION OF SUBJECT MATTER**    see supplemental sheet

According to International Patent Classification (IPC) or to both national classification and IPC

**B. FIELDS SEARCHED**

Minimum documentation searched (classification system followed by classification symbols)

B01J 21/04, 23/75, 37/02, C07C 1/04

Documentation searched other than minimum documentation to the extent that such documents are included in the fields searched

Electronic data base consulted during the international search (name of data base and, where practicable, search terms used)

PAJ, Esp@cenet, DWPI, USPTO, CIPO, SIPO

**C. DOCUMENTS CONSIDERED TO BE RELEVANT**

| Category* | Citation of document, with indication, where appropriate, of the relevant passages | Relevant to claim No. |
|---|---|---|
| A | US 2004/0132833 A1 (RAFAEL L. ESPINOZA et al.) 08.07.2004 | 1-7 |
| A | RU 2017517 C1 (DEN NORSKE STATS OLESELSKAP A.C.) 15.08.1994 | 1-7 |
| A | RU 2002106591 A (ENI S.P.A. et al) 20.12.2003, the abstract | 1-7 |
| A | EP 0857513 A (AGIP PETROLI et al.) 12.08.1998 | 1-7 |

☐ Further documents are listed in the continuation of Box C.    ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 June 2006 (19.06.06) | 22 June 2006 (22.06.06) |

| Name and mailing address of the ISA/ | Authorized officer |
|---|---|
| | |
| Facsimile No. | Telephone No. |

Form PCT/ISA/210 (second sheet) (July 1998)

9

**INTERNATIONAL SEARCH REPORT**

| | International application No. |
| --- | --- |
| | PCT/RU 2006/000095 |

CLASSIFICATION OF SUBJECT MATTER

*B01J 21/04* *(2006.01)*
*B01J 23/75* *(2006.01)*
*B01J 37/02* *(2006.01)*
*C07C 1/04* *(2006.01)*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4801573 A
- US 5028634 A
- US 6271432 B
- EP 0313375 A
- EP 1239019 A
- US 20040204506 A
- US 20040132833 A1

**Non-patent literature cited in the description**

- *Journal of Catalysis,* 1985, vol. 93, 38